# EUROPEAN PATENT APPLICATION

(11) **EP 0 872 990 A1**
(43) Date of publication of application: **21.10.1998**
(21) Application number: 98301531.4
(22) Date of filing: 03.03.1998
(51) Int. Cl.: H04L 29/06, G06F 17/00, H04L 12/56

(54) **Methods and apparatus for providing a broker application server**

(30) Priority: 15.04.1997 US 842590
(71) Applicant: AT&T Corp., New York, NY 10013-2412 (US)
(72) Inventor: Bowker, Duane Oliver, Tinton Falls, New Jersey 07724 (US); Buhler, Gerhard, Little Silver, New Jersey 07739 (US); Polyzois, Christos Alkiviadis, Chatham, New Jersey 07928 (US); Robinson, Bethany Scott, Lebanon, New Jersey 08833 (US)
(74) Representative: Harding, Richard Patrick

(57) **Abstract**

A broker application server for facilitating communication between one or more senders and one or more receivers over a digital packet network. Each receiver receives data in a preferred format. Information identifying the preferred data format of each receiver is stored in a database in the broker application server. The broker application server receives digital packets addressed to a receiver. It extracts data and address information from the packet and optionally decrypts the data. It examines the data to identify the data format. If the data is in the preferred format of the addressed receiver, the broker application server optionally encrypts the data, formats it into a packet, and transmits it to the appropriate receiver. If the data is not in the preferred format of the addressed receiver, the data is transcoded into a common or raw data format and further transcoded into the preferred data format of the addressed receiver before being optionally encrypted, formatted into a digital packet, and transmitted to the addressed receiver.

## Description

### Field of the Invention

The present invention relates generally to brokering services within computer networks. More particularly, the invention relates to methods and apparatus for passing data between the Intemet and a computer or peripheral and for translating data received from the Internet to a user's preferred format.

### Background of the Invention

Recently, the Internet has grown from being a somewhat esoteric and restricted community to being the meeting ground of vast numbers of users. Large numbers of new users have obtained Intemet access, and many new content providers are now seeking to provide access to their products or services via the Internet. Efforts to make the Internet accessible to users who did not wish to go to the expense of purchasing a computer have been highly publicized. Plans have been announced for the marketing of low cost terminals with reduced feature sets which could provide access to an Internet provider, and such products were demonstrated and shipped. The access provided by such terminals is more limited compared to that utilizing a full function computer, but they are much less expensive than a more general purpose computer which might provide features which a user did not need or want.

Complicating efforts to provide such terminals, and even complicating the lives of Intemet users with large and powerful computers, has been the proliferation of ever more elaborate Intemet content. Internet content now routinely may include, for example, pictures, sound, animated titles, streaming audio, streaming video, and movies, with new features being developed almost daily. These content features may present problems for simple terminals, and they may present a processing burden to fuller function computers and their users as well. This is particularly true with respect to beginning computer users. As an example, in order to display many sophisticated content features, a user must download and install what are called "plug-ins". Plug-ins may be defined as special application programs activated by a user's Internet browser, which display whatever special features the plug-in is designed to display, such as Quicktime® movies, RealAudio®, VIVO® streaming video, and so on. These plug-ins are often quite large in terms of the memory required to store them, and although they are often provided to the user free of charge, they nevertheless represent a significant investment of time for downloading, installation, and maintenance, as well as requiring a significant allocation of disk memory. Such browser related issues will be recognized as exemplary. Other examples are email attachments which require conversion or encoded files, such as MIME files, which need to be unencoded. Such processes should ideally be transparent to the user.

It would represent a significant improvement over the present state of the art if a broker server could receive information from a client about the client's preferred viewing protocols and translate received packets so that they could be conveniently viewed by the client without the client having to undertake the downloading of a plug-in or the like. Such a capability might well be critical for the support of an Intemet-only terminal, but would also represent a significant advantage even where the client was a top-end multimedia computer system. The user of a powerful multimedia system would, by downloading and installing all necessary plug-ins, be able to display all Internet content features, but at a significant commitment of time and disk space which he or she might wish to avoid. Further, a significant barrier to further growth of Internet commerce is that the interchange of all forms of information and data must become easier to attract a broader base of less computer literate users. A broker server which could remove the necessity of dealing with plug-ins would provide significant advantages to all classes of users.

A broker server with translation capabilities could also provide individual users with the capability of translating between different formats: for example, audio information from WAV to AU, visual information from JPG to GIF, and so on.

In addition to translation of Internet content features which are commonly presently used, there exists a potential for translating different information formats which are not commonly thought of as subject to translation. For example, a broker server could provide speech-to-text or text-to-speech translation capabilities. Implementation of such a capability might require significant computing power and be more economically performed by a server, rather than by a client computer operated by an end user. Additional uses are translation of video to still images, TIF documents, such as facsimile images, to ASCII by using optical character recognition ("OCR") within the broker, for example, and MIDI to synthesized music. The above features are provided as exemplary of areas in which improved operation is desirable. These and other features would give a broker server significant new capabilities which no Internet provider presently provides. These features would provide great flexibility to users, allowing users to employ their preferred information formats, and to communicate with other users and content providers who use entirely different and incompatible formats.

Format conversion capability presently exists in personal computers, usually as non-real-time format conversion programs. For example, a VOC file can be converted to a WAV file. This conversion typically does not happen in real time and is not transparent to the user. Other converters exist which are capable of performing a conversion from one format to another as opposed to providing a flexible conversion facility based on user preferences.

There exists, therefore, a need in the art for a broker server which can provide a facility for conversion between data formats in real time, transparent to the user, and flexibly based on inputs from the user.

### Summary of the Invention

A Broker Application Server, or BAS, according to one aspect of the present invention, receives an input from a user identifying the user's preferred data format or formats. The BAS receives digital packets from a server, extracts data from the packets, performs an optional security encryption or decryption step, and examines the data to determine if the data is in the user's preferred format. While it is presently preferred that this conversion proceed on a packet by packet basis as described more fully below, it will be recognized that for some formats the BAS will collect all or some packets to be converted before conversion is done. If the data is in the user's preferred format, the BAS may perform an optional security encryption or decryption step, formats the data into packets, and then transmits it to the user. If the data is not in the user's preferred data format, the BAS transcodes the data into a common format, and then transcodes the data from a common format to the user's preferred format. Alternatively, the BAS may in appropriate circumstances transcode data directly into the user's preferred format. In the event the BAS cannot transcode data to the user's preferred format, preferably it will transcode the data to a second format which while not preferred is still understandable or compatible. The BAS then performs an optional security encryption or decryption step, formats the data into packets, and transmits it to the user.

An alternative aspect of the present invention also includes a database of preferred formats for customers or, alternatively, storage to hold preferred format information derived at the establishment of a connection between the customer and the BAS. A secondary format may also be identified and stored. In this embodiment of the present invention, after each data packet has been transcoded to a common format, the BAS looks up the client to which the packet is addressed to find the client's preferred data format, as well as the secondary format if necessary. The BAS then transcodes the data to that client's preferred format, optionally encrypts the data, formats the data into a packet, and transmits the data to the user. A BAS according to this aspect of the present invention can accommodate a substantial number of users, the number being only limited by the constraints of the network hardware providing the connection and by the hardware chosen for the BAS. A system in accordance with the present invention can be flexibly expanded as may be required.

A more complete understanding of the present invention, as well as further features and advantages of the invention, will be apparent from the following Detailed Description and the accompanying drawings.

### Brief Description of the Drawings

Fig. 1 is a functional block diagram representing a Broker Application Server ("BAS") according to one aspect of the present invention;
Fig. 2 is a functional block diagram representing a BAS according to another aspect of the present invention;
Fig. 3 is a flowchart of a process for translating data to a user's preferred format in accordance with the present invention;
Fig. 4 is a hardware diagram illustrating hardware components of a BAS according to the teachings of the present invention; and
Fig. 5 is a network diagram illustrating a network environment in which a BAS according to the present invention can advantageously operate.

### Detailed Description

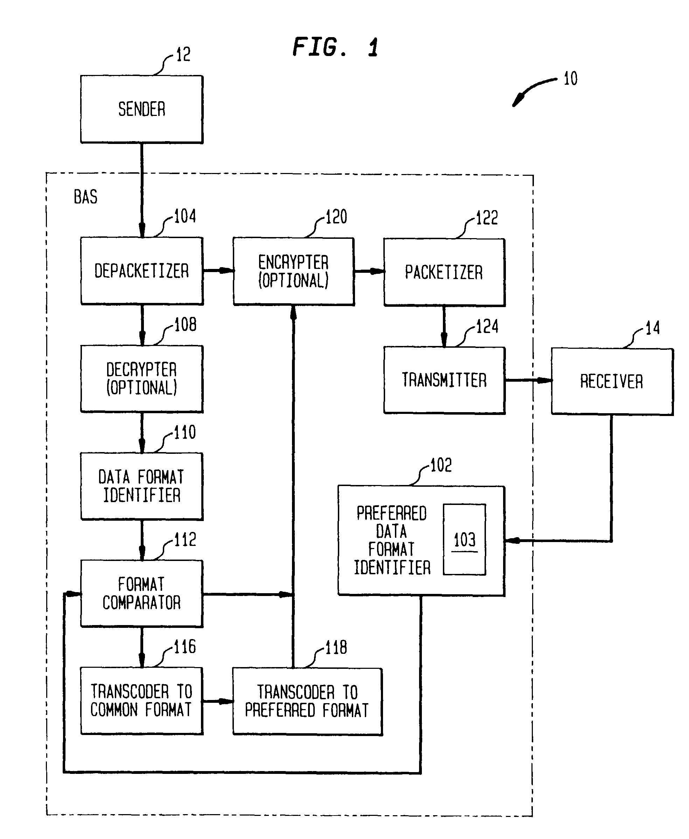

Fig. 1 illustrates a BAS 10 which can advantageously serve as an intermediary between a sender 12 and a receiver 14. Sender 12 can be an individual computer, a network node, a Point of Presence of an Internet Service Provider, or any other device which transmits digitized packets. Receiver 14 is typically a client computer operated by a user who subscribes to a service of which BAS 10 is a component. The receiver 14 may suitably be a general purpose personal computer or an Internet or web terminal with more limited functionality. While a single sender 12 and receiver 14 are shown in Fig. 1 for ease of illustration, it will be recognized that a large number of senders and receivers will typically be served by the BAS 10. By way of example, the sender 12 and receiver 14 may be connected to BAS 10 utilizing modems and analog or digital transmission via telephone lines or any other suitable network connections. While it is presently preferred that a sender will send a file which is transmitted and received in compatible format as described herein, it will also be recognized that an incompatible block of data may be received by a user who will send that block to BAS 10 and then receive back the preferred format so that a single user is both the sender and the receiver.

When a connection is established between the BAS 10 and the receiver 14, control is passed to a preferred data format identifier 102 and the preferred data format of the receiver 14 is recognized and stored in a memory 103 by the BAS 10. A secondary or additional data formats may also be stored. Sender 12 transmits packets to BAS 10, each packet being addressed to the receiver 14. When BAS 10 receives a packet, control is first passed to depacketizer 104. The data is extracted from the packet and the address information stored in the packet is examined. Control is then passed to decrypter 108 and the data is decrypted if it was received in encrypted form. Control is then passed to data format identifier 110 and the data format is identified. Control is then passed to format comparator 112, and the identified format for the data is examined to determine if it is in the preferred data format of the receiver 14. If the data is in the preferred format of receiver 14, control is passed directly to encrypter 120. If the data is not in the preferred format of receiver 14, control is transferred to a first transcoder 116 and the data is transcoded into a common or generic format. The data now in a common format is then further transcoded in a second transcoder 118 into the preferred format of the receiver 14. While the above described conversion arrangement is presently preferred, it will be recognized that in appropriate circumstances a single transcoder may suffice to perform the conversion to preferred format. For formats in which packet by packet conversion is not possible or desirable, all or some of the packets may be stored in a memory and then converted as a unit. For example, a frame of video will consist of multiple packets which should be converted together.

Following conversion, control is then transferred to encrypter 120 and the data is optionally encrypted. The data is transferred to packetizer 122 and reformatted into a packet. The data is finally transmitted to the receiver 14 and the user by transmitter 124. If the data does not need to be encrypted, block 120 is bypassed and the data is transferred directly to the packetizer 122. The foregoing data processing repeats for each packet except as addressed above where multiple packets are stored and translated together.

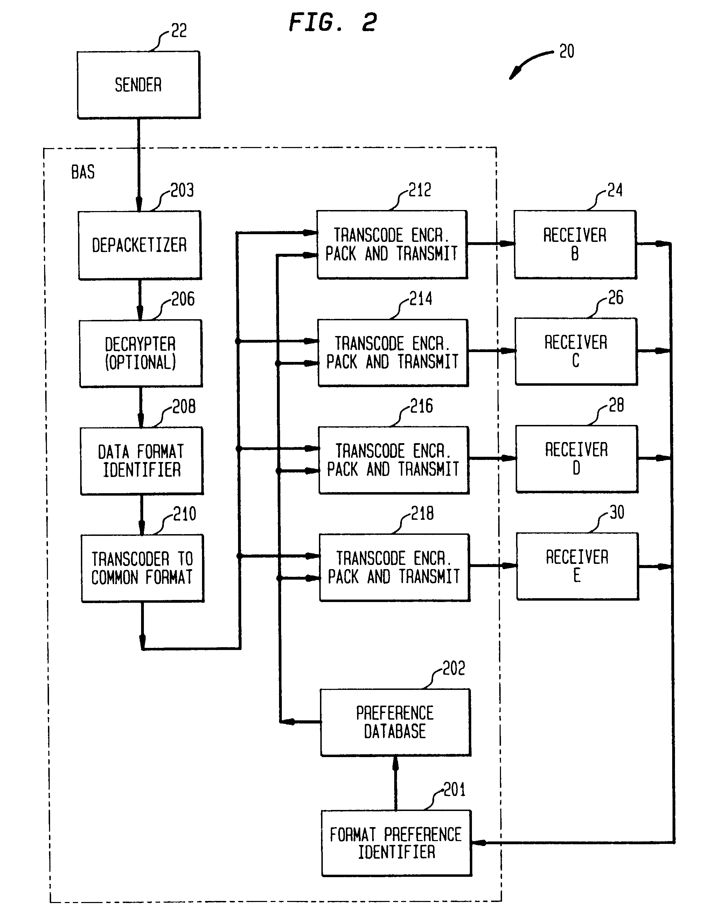

Fig. 2 functionally illustrates a second BAS 20 according to a second embodiment of the present invention. BAS 20 provides an interface between a sender 22 and a plurality of receivers 24, 26, 28 and 30. For purposes of simplicity, only a single sender and four receivers are shown; however, depending on the design of BAS 20 a large number of both senders and receivers may be accommodated.

When each of the receivers 24, 26, 28 and 30 first establishes a connection with the BAS 20, control is transferred to a format preference identifier 201 and a preference database 202 is established, storing the preferred data format of each of receivers 24, 26, 28 and 30. When the BAS 20 receives a packet from the sender 22, control processing starts at depacketizer 203, and depacketization occurs. That is, the data is extracted and evaluated to determine if it is encrypted and the packet address is read. If the packet is encrypted, control is transferred to decryption circuitry or decrypter 206 and the packet is decrypted if it was received in an encrypted format. Control is then transferred to data format identifier 208 and the data format of the packet data is identified. Next, processing passes to a first transcoder 210 and the packet data is transcoded into a common or generic format. The preferred data format of the addressed receiver 24, 26, 28 or 30 is identified from the data obtained and stored by format preference identifier 201. Finally, transcoding, encrypting and packetizing circuits 212, 214, 216 or 218 are alternatively employed depending on the destination address of the packet data. The packet data is then transcoded to the preferred format of the destination receiver, optionally encrypted, packetized, and routed to the appropriate receiver 24, 26, 28, or 30 respectively. This process repeats for every new packet received except as addressed above where multiple packets are stored before transcoding.

Preferably, each time one of the receivers 24, 26, 28 or 30 establishes or breaks a connection, step 201 is repeated to update the preferred data format information and alternative data formats as desired. Thus, data can be properly formatted for and routed to any of a number of destination receivers even where those receivers have significantly different capabilities and format preferences.

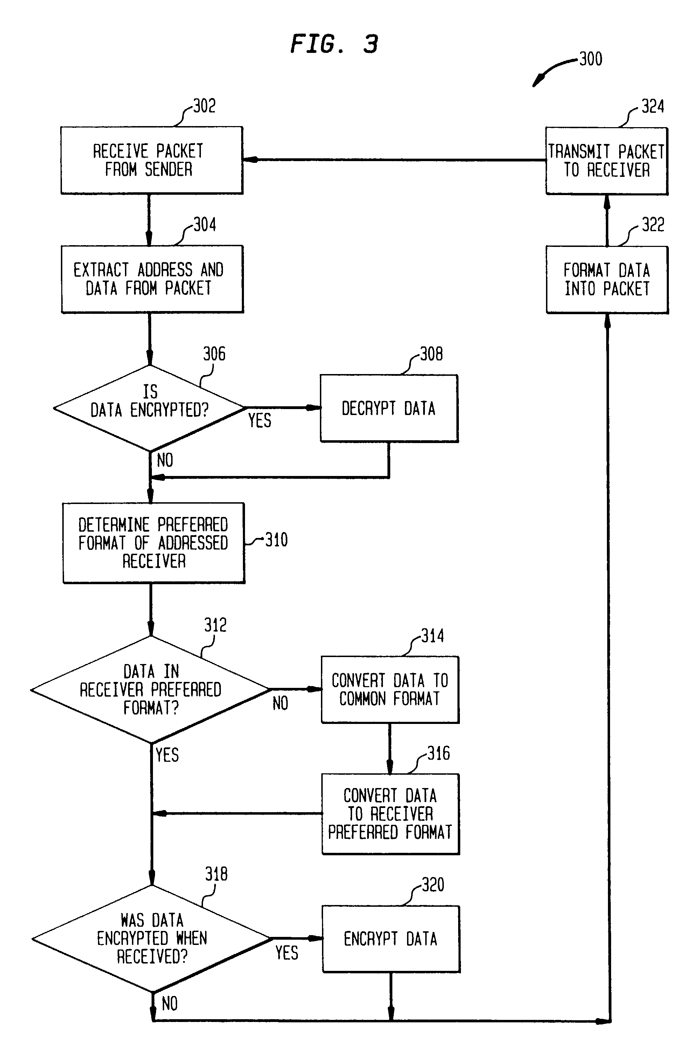

Fig. 3 illustrates a process 300 according to the present invention which may suitably be carried out by a broker application server such as the BAS 10 illustrated in Fig. 1 or the BAS 20 of Fig. 2. In step 302, a packet is received addressed to one of a plurality of receivers. In step 304, the packet is examined and the receiver address and data are extracted from the packet. Next, in step 306, the data is examined to determine if it is in encrypted format. If the data is in encrypted format, processing proceeds to step 308 and the data is decrypted. The process next proceeds to step 310. If the data is not in encrypted format, step 308 is bypassed.

In step 310, the address is examined and the intended, destined or addressed receiver is identified. The preferred data format of the addressed receiver is determined. A database of preferred data formats of client receivers may be maintained, or, alternatively, each receiver may identify its preferred data format to the BAS each time a connection is initiated. In step 312, the data is examined to determine if it is in the preferred data format of the addressed receiver. If the data is not in the preferred format of the addressed receiver, the process proceeds to block 314 and the data is converted to a common, or generic format. Next, the process continues with step 316, and the data is converted from the generic format to the preferred format of the addressed receiver. Step 318 follows. If the data is in the preferred format of the addressed receiver, step 318 immediately follows step 312 with steps 314 and 316 being bypassed. At step 318, it is determined whether the data was in encrypted format when received. This may suitably be accomplished by storing the result of the determination made in step 306 and querying this information at step 318. If the data was received in encrypted format, the process continues with step 320 and the data is encrypted for transmission. If the data was not received in encrypted format, block 320 is bypassed.

In step 322, the data and address are formatted into a packet for transmission and the process continues with step 324. In step 324, the packet is transmitted to the addressed receiver. The process then loops back to step 302 and the process is repeated for the next packet.

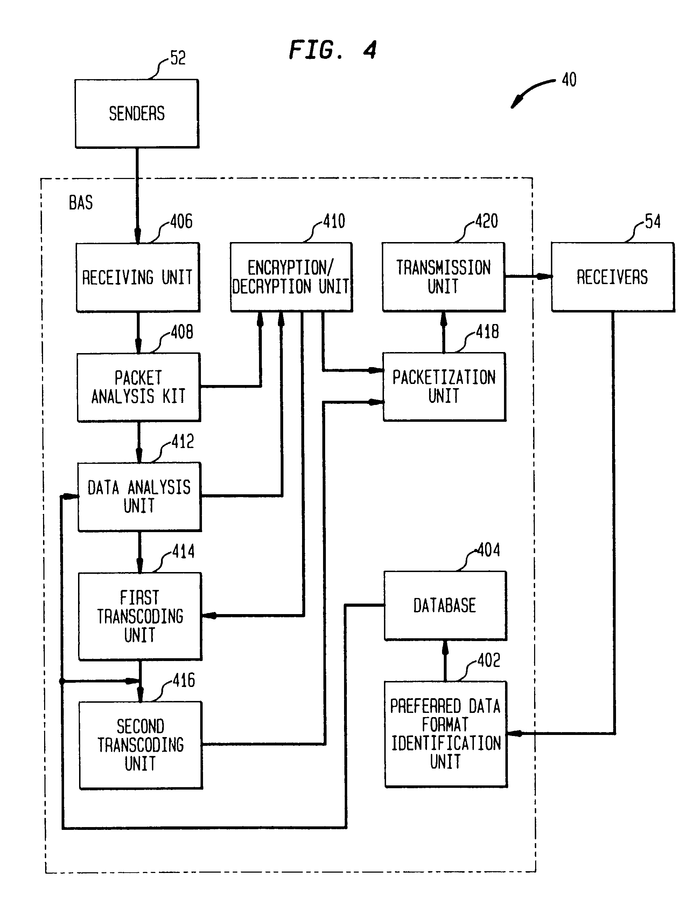

Fig. 4 is a hardware block diagram of a presently preferred BAS 40 according to the teachings of the present invention. The BAS 40 includes a receiving unit or receiver 406 for receiving digital packets from one or more senders 52 shown as a single block in Fig. 4 for ease of illustration. BAS 40 also includes a transmission unit or transmitter 420 for transmitting digital packets to one or more receivers 54 shown as a single block in Fig. 4 for ease of illustration. Each of the receivers 54 accommodates data in a preferred format. BAS 40 includes a presently preferred data format identification unit 402 which receives information from each of receivers 54 and identifies the preferred data format and additional data formats as desired of each particular receiver 54. A database 404 receives and stores information identifying the preferred data format for each of the receivers 54. Identification of the preferred data format and additional data formats as desired for each of the receivers 54 can be accomplished each time one of the receivers 54 connects to the BAS 40. Alternatively, this identification can be stored in a central registry, for example, the user database of an Internet Service Provider employing as part of its network a BAS such as the BAS 40, and updated periodically, with periodic updates being transmitted to the BAS 40.

Upon receiving a digital packet from one of the senders 52, the receiving unit 406 transfers the packet to the packet analysis unit 408. Packet analysis unit 408 extracts data and address information from the packet and transfers the data to an encryption and decryption unit 410. The encryption/decryption unit 410 decrypts the data if it was received in encrypted form and transfers the data to a data analysis unit 412. The data analysis unit 412 identifies the data format of the data and determines if the data is in the preferred format of its destined addressed receiver 54 by comparing the data format against the data format identification stored in database 404. If the data is in the preferred format of the addressed receiver 54, the data analysis unit transfers the data to encryption/decryption unit 410. If the data is not in the preferred format, the data analysis unit 412 transfers the data to a first transcoding unit 414.

The first transcoding unit 414 reformats data received from data analysis unit 412 into a common, or "raw" data format. It then transfers this raw data to a second transcoding unit 416. The second transcoding unit 416 formats the raw data to the preferred data format or alternative acceptable format of the addressed receiver 54, in accordance with the preference data stored in the database 404, and transfers the data to the encryption/decryption unit 410.

Upon receiving data from the data analysis unit 412 or second transcoding unit 416, the encryption/decryption unit 410 optionally encrypts the data. The encryption unit 410 encrypts the data if BAS 40 originally received the data encrypted. It will be recognized that a preference to encrypt or decrypt data may be identified and stored by the preferred data format identification unit 402, or may be sent by sender 52. With such an approach, senders 52 and receivers 54 may employ different formats of encryption while still maintaining an appropriate level of security. Upon completing its function, the encryption/decryption unit 410 transfers the data to packetization unit or packetizer 418, where the data is formatted into a digital packet. Finally, packetizer 418 transfers the packet to the transmission unit 420, where it is transmitted to the appropriate one of the receivers 54.

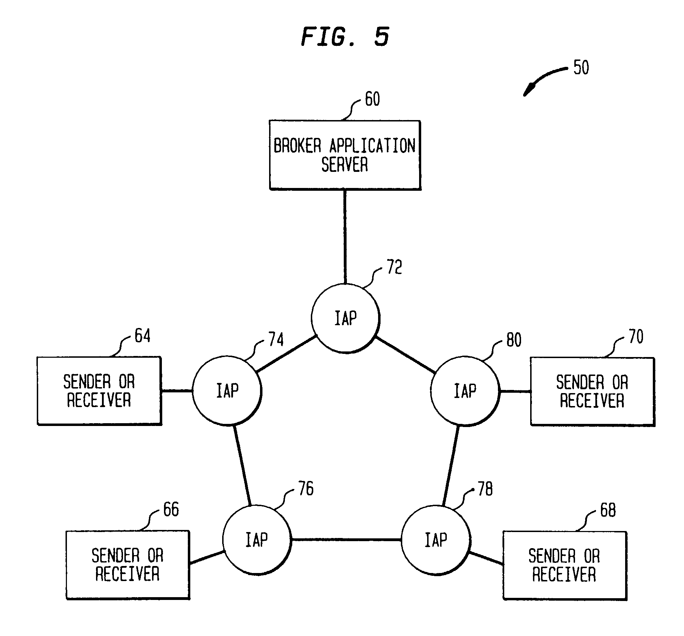

Fig. 5 illustrates a network 50 employing a Broker Application Server 60 according to the teachings of the present invention. Network 50 comprises a number of senders and receivers 64, 66, 68 and 70 which communicate with the BAS 60 via Internet Access Points 72, 74, 76, 78, and 80. BAS 60 can communicate with each sender and receiver on network 50 through the transmission of properly addressed digital packets. BAS 60 need not be directly connected with any sender or receiver in order to perform its functions.

While the present invention is disclosed in the context of a presently preferred embodiment, it will be recognized that a wide variety of implementations may be employed by persons of ordinary skill in the art consistent with the above discussion and the claims which follow below.

## Claims

1. A method for mediating communication in a digital packet network comprising one or more senders (52) and one or more receivers (54), each of said senders transmitting digital packets, each of said packets containing data and address information, data in each of said packets having a particular data format, each of said receivers being operative to receive data in one or more preferred data formats, said method comprising:
receiving (406) a digital packet from a sender at a broker application server;
extracting (408) data and address information from said packet utilizing the broker application server;
identifying (412) said data format of said data;
if said data format is identical to said preferred data format of a receiver associated with the extracted data and address information, packetizing (418) said data and transmitting (420) said data to said receiver;
if said data format is not identical to said preferred data format of said receiver, transcoding (414, 416) said data to said preferred data format of each of said receivers, packetizing (418) said data, and transmitting (420) said data to said receiver corresponding to said address information contained in said received packet.

2. The method of claim **1** further comprising the step of, for each of said receivers, identifying (402) and storing (404) said preferred data format in a memory in the broker application server.

3. The method of claim **2** further comprising the step of examining (412) said data to determine whether it is encrypted and decrypting (410) said data if said data is encrypted.

4. The method of claim **3** further comprising the step of encrypting (410) said data before packetizing (418) it for transmission (420) to said receiver, if said data was encrypted when received.

5. The method of claim **3** further comprising the step of determining (402) a preferred encryption format for said receiver and encrypting (410) said data in said preferred encryption format before packetizing (418) it for transmission (420) to said receiver.

6. A broker application server (40) for facilitating communication between a plurality of senders (52) and a plurality of receivers (54) over a digital packet network, comprising:
a preferred data format identification unit (402) for receiving data identifying a preferred data format for each of said receivers;
a database (404) for storing said preferred data format identification for each of said receivers;
a receiving unit (406) for receiving digital packets from each of said senders;
a packet analysis unit (408) for extracting data and address information from digital packets;
a packetization unit (418) for formatting data and address information into a digital packet for transmission to one of said receivers;
a transmission unit (420) for receiving a digital packet from said packetization unit and transmitting said digital packet to one of said receivers;
a first transcoding unit (414) for transcoding data into a common data format;
a second transcoding (416) unit for receiving data from said first transcoding unit, transcoding said data to said preferred data format of one of said receivers to which said data is addressed, and transferring said data to said packetization unit; and
a data analysis unit (412) for identifying a data format of said data, said data analysis unit also being operative to read from said database said preferred data format of a receiver to which said data packet is addressed and transferring said data directly to said packetization unit if said data is in said preferred format of said receiver or transferring said data to said first transcoding unit if said data is not in said preferred format of said receiver.

7. The broker application server of claim 6 further comprising an encryption and decryption unit (410) for receiving data from said packet analysis unit, decrypting data which is received encrypted, and transferring said decrypted data to said data analysis unit, said encryption and decryption unit also being operative to receive data from said data analysis unit or said second transcoding unit, encrypting said data when said data was extracted from an encrypted packet, and transferring said data to said packetization unit.

8. The apparatus of claim **6** wherein the data format identification unit further operates to determine a preferred encryption format for an addressed receiver.

9. The apparatus of claim **8** wherein the decryption and encryption unit operates to encrypt data in the preferred encryption format for the addressed receiver.

10. The method of claim **1** where the step of transcoding said data to said preferred data format comprises first transcoding (414) said data to a common format and then transcoding (416) said data from the common format into the preferred format.
